# EUROPÄISCHE PATENTANMELDUNG

(11) **EP 0 678 327 A2**
(43) Veröffentlichungstag der Anmeldung: **25.10.1995**
(21) Anmeldenummer: 95101515.5
(22) Anmeldetag: 03.02.1995
(51) Int. Cl.: B01D 69/00, B01D 67/00, B01D 29/48

(54) **Membran zur Mikrofiltration von Suspensionen oder zur Gastrennung**

(30) Priorität: 19.04.1994 DE 4413574
(71) Anmelder: Altenburger Electronic GmbH, D-77956 Seelbach (DE)
(72) Erfinder: Siegfried, Hans-Günther, D-77933 Lahr (DE)
(74) Vertreter: Eder, Thomas, Dr.-Ing.

(57) **Zusammenfassung**

Die Membran (1) ist durch einen im wesentlichen schraubenförmig zu einem Rohr gewickelten Draht (3) gebildet, wobei das zu filternde Medium zwischen den benachbarten Windungen der Membran hindurchtritt und wobei zumindest eine Oberfläche der jeweils benachbarten Windungen in zumindest einem Teilbereich derart strukturiert ist, daß der strukturierte Teilbereich in Richtung von der Membraninnenwandung zur Membranaußenwandung verlaufende Kanäle (7,7',7'') und/oder Feinststrukturierungen (Aufrauhungen) aufweist.

## Beschreibung

Die Erfindung betrifft eine Membran zur Mikrofiltration von Suspensionen oder zur Gastrennung mit den Merkmalen des Oberbegriffs des Patentanspruchs 1. Des weiteren betrifft die Erfindung ein Verfahren zur Herstellung einer derartigen Membran.

Es sind Verfahren und Filtervorrichtungen zur Mikrofiltration von Partikeln aus Suspensionen oder Gasen unter Verwendung einer rohrförmig aus Draht gewickelten Membran bekannt. Eine solche Vorrichtung ist beispielsweise in DE 40 01 654 C2 beschrieben. Bei dieser Vorrichtung wird das Feed unter Druck bis in den Hochdruckbereich über 1000 bar hinein durch die Membran geführt. Die schlitzförmigen Membranporen zwischen benachbarten Membranwindungen ermöglichen die Trennung der zu filternden Partikel aus dem Feed. Da der bei der Herstellung der Membran verwendete Draht durch den Fertigungsprozeß Unebenheiten, z.B. als Lunker oder Riefen, aufweist, zur Filterung feinster Partikel jedoch geringere Windungsabstände erforderlich sind, wird in der DE 40 01 654 C2 vorgeschlagen, die Unebenheiten durch axialen Druck auf die Membran bis auf 1 nm zu reduzieren und den erforderlichen Filterabstand durch Veränderung der auf die Membran ausgeübten axialen Druckkraft oder die Umkehrung der Druckkraft in eine Zugkraft einzustellen. Zur Erzeugung der Druckkraft wird vorgeschlagen, die Membranwindungen unter Vorspannung zu wickeln.

Nachteilig bei derartigen Membranen ist jedoch, daß der filterwirksame Bereich der Windungen zwar die maximale Partikelgröße in Richtung der Membranachse begrenzt, nicht jedoch in der hierzu senkrechten Ebene, so daß scheibenförmige oder stabförmige Partikel mit größerem Durchmesser bzw. größerer Länge als der Windungsabstand die Membran passieren können.

Aus diesem Grund wird ebenfalls in der DE 40 01 654 C2 vorgeschlagen, in die Membranporen organische oder anorganische Substanzen einzubringen, die eine poröse oder transportaktive Feintrennschicht bilden, die der Stoff- oder Phasentrennung dient. Durch die Feintrennschicht wird die Wirkung der schlitzförmigen Membranporen durch die Filterwirkung der Feintrennschicht ersetzt bzw. die Wirkungen überlagern sich, wobei die schlitzförmigen Membranporen selbstverständlich für den Aufbau der Feintrennschicht erforderlich sind. Nachteilig bei diesem Verfahren zur Herstellung der Membran ist jedoch, daß für den Aufbau der Feintrennschicht ein separater Fertigungsschritt nötig ist.

Deshalb wird in der DE 40 22 738 C2 vorgeschlagen, die Feintrennschicht entweder durch im Feed ohnehin vorhandene oder diesem zugesetzte Substanzen während der Filtration durch die Querstromwirkung aufzubauen und aufrechtzuerhalten.

Nachteilig bei diesen bekannten Membranen bzw. Verfahren zur Herstellung der Membrane ist jedoch zum einen die relativ geringe Permeationsmenge und zum anderen die in bestimmten Fällen geringe Haftkraft der Feintrennschicht an den Membranporen, die insbesondere dann eine Durchbruchgefahr bedingt, wenn der Windungsabstand der Membran größer als die Teilchengröße der die Feintrennschicht bildenden Substanzen gewählt wird. Dies ist jedoch wegen der damit verbundenen höheren Permeationsmenge wünschenswert.

Der Erfindung liegt daher die Aufgabe zugrunde, eine Membran sowie ein Verfahren zur Herstellung einer solchen Membran zu schaffen, wobei mit einfachsten Mitteln der Permeationsfluß erhöht und darüber hinaus eine breitere Deck- oder Feintrennschichtauflage ohne Durchbruchgefahr ermöglicht wird.

Die Erfindung löst diese Aufgabe mit den Merkmalen der Patentansprüche 1 bzw. 13.

Die Erfindung geht von der Erkenntnis aus, daß sich bei den bekannten Membranen aufgrund der Verwendung von Drähten mit glatter Oberfläche und der Einstellung des in der Mikrofiltration erforderlichen geringen Windungsabstandes die zwischen dem Feed und den Windungsoberflächen auftretenden, durch die hohe Anzahl atomarer oder molekularer Kontaktstellen an den Porenwandungen verursachten Adhäsionskräfte besonders negativ auf die mengenmäßige Permeationsleistung auswirken. Denn mit hohen Adhäsionskräften ist eine insbesondere in Verbindung mit der Oberflächenspannung des Feeds eine reduzierte Kapillarströmung verbunden.

Ferner geht die Erfindung von der Erkenntnis aus, daß sich die ungerichteten Filtrations- und Rückspülabläufe ungünstig auf die Leistung auswirken: Denn bei allen Rohrmembranen können Filtrations- und Rückspülrichtungen zwar in einem Winkel von 90°, d.h. in radialer Richtung, zur Membranachse verlaufen. Sie können aber auch weit davon abweichen und daher nicht den kürzesten Weg durch den engsten Windungsabstand nehmen - wie es wünschenswert wäre -, sondern einen längeren schräg, d.h. windschief, zur Membranachse verlaufenden Weg. Dieser längere Weg absorbiert folglich mehr Energie und führt durch Verwirbelungen als Folge gegenseitiger Beeinflussung beim Durchtritt durch die Membran zu Filtrationsstörungen und verminderter Effektivität der Rückspülung.

Durch die Strukturierung zumindest einer Oberfläche der jeweils benachbarten Windungen in zumindest einem Teilbereich derart, daß der strukturierte Teilbereich in Richtung von der Membraninnenwandung zur Membranaußenwandung verlaufende Kanäle und/oder z.B. durch chemisch-physikalische Verfahren wie Ätzen oder physikalische Verfahren wie Sandstrahlen erzeugte feinste Strukturen (Aufrauhungen) aufweist, werden die Kapillarströmung erhöht und die Adhäsionskräfte reduziert bzw. ungerichtete Filtrations- oder Rückspülvorgänge weitgehend vermieden, was mit einer deutlichen Steigerung der Permeationsmenge einhergeht. Gleichzeitig ermöglicht die Strukturierung, sei es in Form von Kanälen und/oder in Form von Aufrauhungen, eine verbesserte Haftung einer Feintrennschicht und eine damit einhergehende Reduzierung der Durchbruchgefahr.

Gegenüber bekannten Membranen bewirken die Kanäle eine zusätzliche seitliche Führung des Feed, insbesondere im filterwirksamen Bereich, was zu einer Erhöhung der Strömungsgeschwindigkeit führt. Mit anderen Worten: Der bei bekannten Membranen vorhandene, keilförmige Durchlaß des Feed und Rückspülmediums in im wesentlichen radialer Richtung durch die Membran führt zwar bereits zu einer erheblichen Beschleunigung der transmembranen Bewegung. Diese kann aber nochmals beschleunigt werden, indem der keilförmige Durchlaß auch in Richtung der Membranachse begrenzt wird, so daß sich insgesamt eine trichterähnliche Form der Membranporen ergibt. Dies trägt ebenfalls zu einer Erhöhung der Permeationsmenge bei.

Durch die Strukturierung der Oberfläche der Membranwindungen zumindest in Teilen des filterwirksamen Bereichs ergibt sich zudem der Vorteil, daß ein fester, definierter Abstand zwischen den Windungen erreichbar ist. Dabei hat sich in der Praxis gezeigt, daß insbesondere bei deckschichtkontrolliertem Filtern für einen großen Bereich unterschiedlichster zu filternder Medien bzw. Teilchengrößen eine einzige Membran mit geeingneten Strukturen verwendbar ist. Aufwendige und teuere Vorrichtungen zur Verstellung des Windungsabstandes, wie sie bei bekannten Membranen erforderlich sind, können daher entfallen.

Bei einer Ausführungsform der Erfindung ist der gesamte filterwirksame Bereich der zumindest einen Oberfläche strukturiert.

Die Kanäle können bei dieser, aber auch bei jeder der folgenden Ausführungsformen der Erfindung einen sich in Richtung des kleinsten Abstandes der Windungsoberflächen verjüngenden Querschnitt aufweisen.

Die Kanäle können im Querschnitt spitzwinklig, trapezförmig, kreisbogenförmig oder sinusförmig ausgebildet sein.

Bei der bevorzugten Ausführungsform der Erfindung verlaufen die Kanäle in im wesentlichen radialer Richtung der rohrförmigen Membran. Hierdurch ergibt sich eine Ausrichtung der Filtrations- und Rückspülrichtungen auf den jeweils kürzesten Weg.

Bei einer weiteren Ausführungsform der Erfindung können beide jeweils benachbarten Windungsoberflächen in jeweils zumindest einem Teilbereich strukturiert sein.

Die Windungsoberflächen können dabei so unterschiedlich strukturiert sein, daß die Erhebungen der einen Seite in die Vertiefungen der anderen eingreifen, ohne die Filteröffnungen vollständig zu verschließen.

Die Kanäle in den Windungsoberflächen können jedoch auch in axialer Richtung fluchten.

Bei einer anderen Ausführungsform der Erfindung weisen die Kanäle in der einen Windungsoberfläche einen größeren Querschnitt auf als die Kanäle in der benachbarten Windungsoberfläche.

Des weiteren kann zumindest eine der jeweils benachbarten Windungsoberflächen zur Einstellung eines größeren definierten Windungsabstandes zusätzliche Erhebungen aufweisen, die höher sind als die Erhebungen der Kanäle.

Schließlich kann der Draht nach dem Wickeln der Membran schraubenförmig um die Drahtachse verlaufende Erhebungen und Vertiefungen aufweisen.

Die Strukturierung der Drahtoberfläche kann durch physikalische Verfahren, wie z.B. Prägen oder Rändeln (insbesondere Kanäle), oder durch chemisch-physikalische Verfahren, wie z.B. Ätzen (insbesondere Aufrauhungen), erzeugt werden. Dabei kann die Anwendung der physikalischen Verfahren zur Strukturierung vorzugsweise im Verlauf des Wickelprozesses erfolgen. Die chemischphysikalische Behandlung der Oberflächen kann vorzugsweise vor oder nach dem Wickelprozeß vorgenommen werden.

Weitere Ausführungsformen der Erfindung bzw. des erfindungsgemäßen Verfahrens ergeben sich aus den Unteransprüchen.

Die Erfindung wird nachfolgend anhand in der Zeichnung dargestellter Ausführungsbeispiele näher erläutert. In der Zeichnung zeigen
- Fig. 1: eine teilweise in einer Mittelebene aufgebrochene Seitenansicht einer rohrförmigen gewickelten Membran;
- Fig. 2: eine vergrößerte ausschnittsweise Darstellung zweier Windungen einer ersten Ausführungsform der Erfindung;
- Fig. 3: eine vergrößerte ausschnittsweise Darstellung zweier Windungen einer zweiten Ausführungsform der Erfindung; und
- Fig. 4: eine vergrößerte ausschnittsweise Darstellung dreier Windungen einer dritten Ausführungsform der Erfindung.

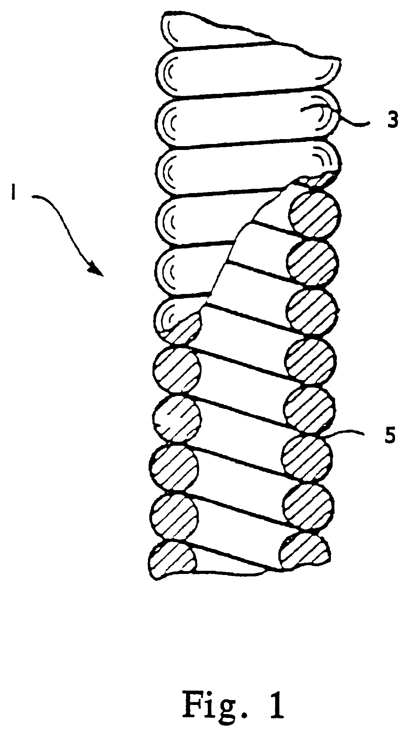

Fig. 1 zeigt teilweise im Längsschnitt den schematischen Aufbau einer erfindungsgemäßen rohrförmigen, aus Draht gewickelten Filtermembran 1. Der Draht 3 besteht aus einem für den jeweiligen Verwendungszweck geeigneten Material, vorzugsweise aus Metall.

Das Wickeln der Membran kann in bekannter Weise unter Vorspannung erfolgen. Des weiteren können nicht dargestellte Mittel zum Ausüben einer axialen Druckkraft oder Zugkraft auf die Membran vorgesehen sein.

Bisher bekannte Membrane werden aus Drähten mit der bei Zieh- oder Extrusionsprozessen üblichen Oberflächenbeschaffenheit gewickelt, d.h., der filterwirksame Bereich 5 zwischen den jeweils benachbarten Windungsoberflächen ist glatt.

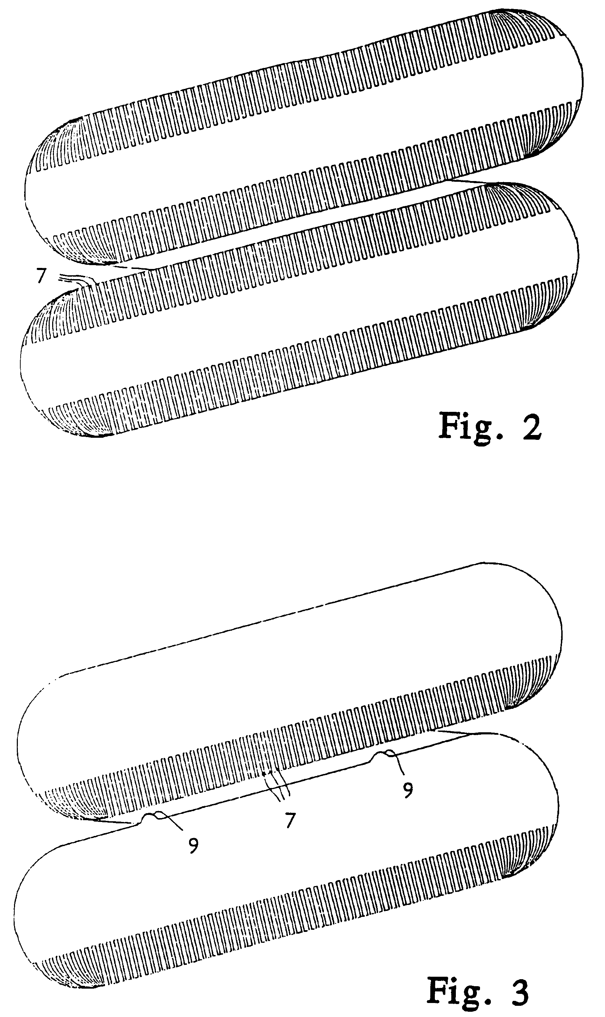

Strukturiert man diesen Bereich (in Fig. 1 aus Gründen der Einfachheit nicht dargestellt) so, daß in den Windungsoberflächen Kanäle 7, 7', 7'' (Fig. 2 bis 4) entstehen, die in Richtung von der Membraninnenwandung zur Membranaußenwandung verlaufen, so wird erreicht, daß das der Aktivseite der Membran (meist das Rohrinnere) zugeführte Feed in Richtung der Kanäle geführt wird. Damit werden bei bekannten Membranen auftretende Verwirbelungen bzw. Störungen des Filter- oder Rückspülvorgangs vermieden.

Anstelle oder zusätzlich zu der vorgenannten Strukturierung durch Kanäle kann eine über die gesamte Windungsoberfläche oder Teile der Windungsoberfläche verlaufende Feinststrukturierung (Aufrauhung) auf chemisch-physikalischem Wege, insbesondere Ätzen, erfolgen. Auf diese Weise werden (zusätzlich) die zwischen den Windungsoberflächen um dem Feed wirksamen Adhäsionskräfte reduziert und die Kapillarkräfte verstärkt, bzw. der nachteilige Einfluß der Oberflächenspannung des Feed reduziert. Die Feinststrukturen (Aufrauhungen) weisen vorzugsweise Rauhtiefen von ca. 0,1 µm oder größer auf.

Hierdurch wird ebenfalls bzw. zusätzlich eine Steigerung der Permeationsmenge erreicht.

Durch jede der beiden vorgenannten Maßnahmen bzw. auch durch deren Kombination wird zudem erreicht, daß bei einer Filterung unter Verwendung einer Feintrennschicht, wie dies beispielsweise in der DE 40 22 738 C2 vorgeschlagen und in der Mikrofiltration überwiegend erfolgt, die Haftung der Feintrennschicht an den Windungsoberflächen im filterwirksamen Bereich verbessert wird.

Die Strukturen bzw. Kanäle 7, 7', 7'' verlaufen, wie in den Fig. 2 bis 4 dargestellt, vorzugsweise in radialer Richtung, bezogen auf die Längsachse der rohrförmigen Membran 1. Hierdurch ist gewährleistet, daß die Filter- bzw. Rückspülabläufe den gewünschten kürzesten Weg durch den engsten Windungsabstand nehmen und nicht einen längeren, windschief zur Membranachse verlaufenden Weg, der mehr Energie erfordert und durch Verwirbelungen als Folge gegenseitiger Beeinflussung beim Durchtritt durch die Membran zu Filtrationsstörungen und verminderter Effektivität der Rückspülung führt.

Die Kanäle 7, 7', 7'' können, wie in den Fig. 2 bis 4 dargestellt, im Querschnitt rechteckig, aber auch spitzwinklig, trapezförmig, kreisbogenförmig oder sinusförmig ausgebildet sein.

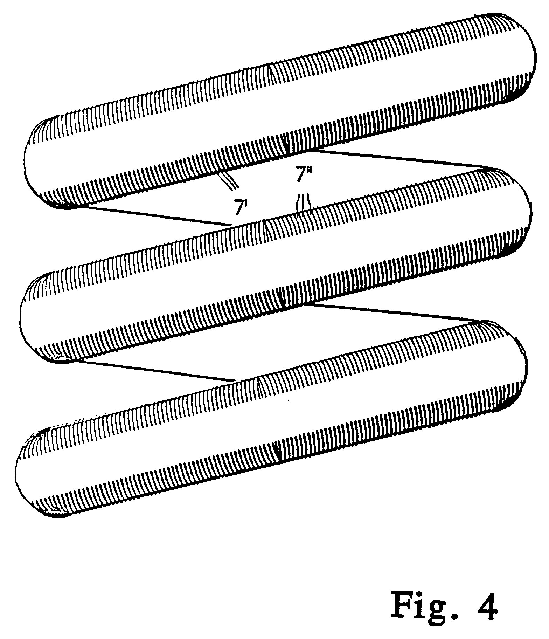

Im filterwirksamen Bereich eröffnen sich damit eine Reihe konstruktiver Möglichkeiten, z.B.:
1. Eine strukturierte Windungsoberfläche steht jeweils einer glatten Windungsoberfläche gegenüber (Fig. 3);
2. Eine ausgeprägt strukturierte Windungsoberfläche (größerer Kanalquerschnitt) steht jeweils einer schwach strukturierten Windungsoberfläche (kleinerer Kanalquerschnitt) gegenüber (Fig. 4);
3. Zwei strukturierte Windungsoberflächen stehen so einander gegenüber, daß die Erhebungen oder Wandungen zwischen jeweils zwei Kanälen der einen Windungsoberfläche in die Vertiefungen, d.h. die Kanäle, der gegenüberliegenden Windungsoberfläche eingreifen, ohne die Filteröffnungen bzw. die Kanäle vollständig zu verschließen;
4. Die Erhebungen oder Wandungen zwischen zwei Kanälen bzw. die Kanäle der einander gegenüberstehenden Windungsoberflächen fluchten;
5. Die jeweils einander gegenüberstehenden Windungsoberflächen erhalten einen zusätzlichen Abstand durch die Ausbildung einzelner Erhebungen 9 (Fig. 3).

Die chemisch-physikalische Strukturierung sowie der Querschnitt der Kanäle bzw. die Höhe der Erhebungen oder Wandungen zwischen jeweils zwei Kanälen richtet sich nach der Zusammensetzung des Feed, insbesondere nach der darin enthaltenen Feststoffart und -größe. Sie kann unterhalb von 1,0 µm liegen aber auch 100,0 µm überschreiten.

Im filterwirksamen Bereich 5 wurden Feed und Rückspülmedium bei bekannten Membranen keilförmig auf großer Breite durch die Membran geleitet. Durch die in die Windungsoberflächen der erfindungsgemäßen Membran eingeformten Strukturen können die Medien als Folge der Drahtkrümmung in eher trichterförmige Bahnen gelenkt werden. Dies trifft vor allem dann zu, wenn die Kanäle im Querschnitt spitzwinklig ausgebildet sind und zum engsten Windungsabstand hin auslaufen.

Da in der Mikrofiltration praktisch ausnahmslos deckschichtkontrolliert, d.h. unter Verwendung einer Feintrennschicht, gefiltert wird, ergeben sich Verfahrensmöglichkeiten, die bisher nicht durchführbar waren:

Es wird z.B. möglich, eine Deckschicht aufzubauen, die einseitig durch eine Struktur gehalten wird. Die gegenüberliegende Windungsoberfläche bleibt glatt. Hierdurch kann Deckschichtmaterial fixiert, aber auch durch geringere Haftung an der glatten Windungsoberfläche- durch Rückspülung einfacher entfernt werden.

In einem weiteren Verfahren greifen die Strukturen ineinander und lassen den Aufbau sehr feinen Deckschichtmaterials zu.

Die Ausbildung einzelner, herausragender Erhebungen, wie in Fig. 3 dargestellt, bietet sich bei der Verwendung groben oder sehr groben Deckschichtmaterials an. Das Deckschichtmaterial trägt sich durch Brückenbildung. Es wird zusätzlich durch die Struktur abgestützt. Der filterwirksame Bereich und damit die Filterleistung können erheblich vergrößert werden.

Schließlich hat sich gezeigt, daß sich bereits beim Ziehprozeß des Drahtes eingezogene Ziehriefen, die beim Wickeln des Drahtes zu schraubenförmig um die Windungen umlaufenden Erhebungen/Vertiefungen führen, ggf. zusammen mit Zusatzstrukturen der vorgenannten Art - die Permeationsmenge weiter erhöhen.

Die Herstellung der Strukturen bzw. Kanäle in den Drahtoberflächen kann auf einfache Weise durch Ätzen oder Sandstrahlen bzw. durch Prägen oder Rändeln erfolgen. Insbesondere ergibt sich ein reduzierter Fertigungsaufwand, wenn das Erzeugen der Kanäle während des Wickelvorgang erfolgt. Das Erzeugen der Feinststrukturen kann vorzugsweise vor oder nach dem Wickeln der Membran vorgenommen werden.

Es hat sich gezeigt, daß durch eine geeignete Wahl der Strukturen bzw. Kanäle erreicht werden kann, daß mit einer einzigen erfindungsgemäßen Membran ein breiter Anwendungsbereich, insbesondere hinsichtlich der Art und Größe der aus dem Feed herauszufiltrierenden Bestandteile, abgedeckt wird, ohne daß hierbei eine Verstellung des Windungsabstandes durch Veränderung einer auf die Membran ausgeübten axialen Zug- oder Druckkraft erforderlich wäre.

## Patentansprüche

1. Membran zur Mikrofiltration von Suspensionen oder zur Gastrennung, welche durch einen im wesentlichen schraubenförmig zu einem Rohr gewickelten Draht gebildet ist, wobei das zu filternde Medium zwischen den benachbarten Windungen der Membran hindurchtritt,
**dadurch gekennzeichnet**,
daß zumindest eine Oberfläche der jeweils benachbarten Windungen in zumindest einem Teilbereich derart strukturiert ist, daß der strukturierte Teilbereich in Richtung von der Membraninnenwandung zur Membranaußenwandung verlaufende Kanäle (7, 7', 7'') und/oder Feinststrukturen (Aufrauhungen) aufweist.

2. Membran nach Anspruch 1, **dadurch gekennzeichnet**, daß der gesamte filterwirksame Bereich der zumindest einen Oberfläche strukturiert ist.

3. Membran nach Anspruch 1 oder 2, **dadurch gekennzeichnet**, daß die Kanäle (7, 7', 7'') einen sich in Richtung des kleinsten Abstandes der Windungsoberflächen verjüngenden Querschnitt aufweisen.

4. Membran nach einem der vorhergehenden Ansprüche, **dadurch gekennzeichnet**, daß die Kanäle (7, 7', 7'') im Querschnitt spitzwinklig, trapezförmig, kreisbogenförmig oder sinusförmig ausgebildet sind.

5. Membran nach einem der vorhergehenden Ansprüche, **dadurch gekennzeichnet**, daß die Kanäle (7, 7', 7'') in im wesentlichen radialer Richtung verlaufen.

6. Membran nach einem der vorhergehenden Ansprüche, **dadurch gekennzeichnet**, daß beide jeweils benachbarten Windungsoberflächen in jeweils zumindest einem Teilbereich strukturiert sind.

7. Membran nach Anspruch 6, **dadurch gekennzeichnet**, daß die Windungsoberflächen so unterschiedlich strukturiert sind, daß die Erhebungen der einen Windungsoberfläche in die Vertiefungen der anderen eingreifen, ohne die Filteröffnungen vollständig zu verschließen.

8. Membran nach Anspruch 6, **dadurch gekennzeichnet**, daß die Kanäle (7, 7', 7'') in den Windungsoberflächen in axialer Richtung fluchten.

9. Membran nach einem der Ansprüche 6 bis 8, **dadurch gekennzeichnet**, daß die Kanäle (7'') in der einen Windungsoberfläche einen größeren Querschnitt aufweisen als die Kanäle (7') in der benachbarten Windungsoberfläche.

10. Membran nach einem der vorhergehenden Ansprüche, **dadurch gekennzeichnet**, daß zumindest eine der jeweils benachbarten Windungsoberflächen zur Einstellung eines größeren definierten Windungsabstandes zusätzliche Erhebungen (9) aufweist.

11. Membran nach einem der vorhergehenden Ansprüche, **dadurch gekennzeichnet**, daß der Draht (3) nach dem Wickeln der Membran (1) schraubenförmig um die Drahtachse verlaufende Erhebungen und Vertiefungen aufweist.

12. Membran nach einem der vorhergehenden Ansprüche, **dadurch gekennzeichnet**, daß die Feinststrukturen eine Rauhtiefe von 0,1 µm oder größer aufweisen.

13. Verfahren zur Herstellung einer Membran nach einem der Ansprüche 1 bis 10, **dadurch gekennzeichnet**, daß zur Wicklung der rohrförmigen Membran (1) ein in zumindest einem Teilbereich seiner Oberfläche strukturierter Draht (3) verwendet wird.

14. Verfahren nach Anspruch 13, **dadurch gekennzeichnet**, daß der Draht (3) einseitig strukturiert wird.

15. Verfahren nach Anspruch 13, dadurch gekennzeichnet, daß der Draht (3) an zwei gegenüberliegenden Seiten strukturiert wird.

16. Verfahren nach einem der Ansprüche 13 bis 15, **dadurch gekennzeichnet**, daß vor der Strukturierung der Drahtoberfläche Ziehriefen beim Ziehen des Drahtes (3) herbeigeführt werden.

17. Verfahren nach einem der Ansprüche 13 bis 16, **dadurch gekennzeichnet**, daß die Strukturierung der Drahtoberfläche durch physikalische Verfahren, vorzugsweise Prägen oder Rändeln, oder chemisch-physikalische Verfahren, insbesondere Ätzen, oder eine beliebige Kombination dieser Verfahren erzeugt wird.

18. Verfahren nach Anspruch 17, **dadurch gekennzeichnet**, daß die Strukturierung der Drahtoberfläche mittels physikalischer Verfahren im Verlauf des Wickelprozesses erfolgt.

19. Verfahren nach einem der Ansprüche 17 oder 18, **dadurch gekennzeichnet**, daß die Strukturierung der Drahtoberfläche mittels chemisch-physikalischer Verfahren vor oder nach dem Wickelprozeß erfolgt.
